# EUROPÄISCHE PATENTANMELDUNG

(11) **EP 2 985 474 A1**
(43) Veröffentlichungstag der Anmeldung: **17.02.2016**
(21) Anmeldenummer: 15180351.7
(22) Anmeldetag: 10.08.2015
(51) Int. Cl.: F16B 2/12, E04F 10/00

(54) **KLEMMVORRICHTUNG FÜR BALKONGELÄNDER**

(30) Priorität: 11.08.2014 DE 202014006326 U
(71) Anmelder: Aerolux GmbH, 22848 Norderstedt (DE)
(72) Erfinder: ENSSLE, Holm, 22043 Hamburg (DE)
(74) Vertreter: Glawe, Delfs, Moll

(57) **Zusammenfassung**

Die Erfindung betrifft eine Klemmvorrichtung (1) zur Befestigung am Handlauf (4) von Geländern (5). Dabei ist erfindungsgemäß vorgesehen, dass die Klemmvorrichtung (1) mindestens eine Klemmbacke (2), die mindestens eine Schieberfläche (28) aufweist, und mindestens einen an der Klemmbacke (2) angeordneten Schieber (3), der mindestens eine Anlagefläche (37), die zur Anlage mindestens einer Teiloberfläche eines Handlaufs (4) eines Geländers (5) ausgebildet ist, und mindestens eine der Anlagefläche (37) gegenüberliegende Backenfläche (38) aufweist, die zur Anlage an die Schieberfläche (28) und zur Verschiebung entlang der Schieberfläche (28) ausgebildet ist, umfasst. Die Klemmvorrichtung (1) ist zur Befestigung an Handläufen (4) mit unterschiedlichen Abständen zwischen der oberen Kante und der unteren Kante geeignet.

## Beschreibung

Die Erfindung betrifft eine Klemmvorrichtung zur Befestigung von Anbauteilen am Handlauf von Geländern.

Balkons werden bauart- und zweckbedingt durch die Sonne ausgeleuchtet. Personen, die sich auf dem Balkons aufhalten, sind damit der direkten Sonneneinstrahlung ausgesetzt. Zum Schutz vor der direkten Sonneneinstrahlung werden Anbauteile für das Balkongeländer, so genannte Balkon Verschattungen, eingesetzt. Die Balkon Verschattungen werden regelmäßig mit einer Befestigungsvorrichtung an dem Handlauf eines Geländers angebracht.

Bekannte Befestigungsvorrichtungen sind in Form einer Schraubzwinge ausgebildet, die einen festen Spannarm und einen beweglichen Spannarm umfassen. Der bewegliche Spannarm ist an einer Schiene geführt, an der das Anbauteil befestigt werden kann. Weiter wird der bewegliche Spannarm mittels einer Spannvorrichtung in Richtung des festen Spannarms gespannt. Die Verspannung der Spannarme erfolgt durch eine Spannvorrichtung in Form einer Schraube. Die Schraube drückt dabei der bewegliche Spannarm gegen den zwischen den beiden Spannarmen angeordneten Handlauf. Dazu ist es nötig, den Handlauf so zwischen den Spannbeinen anzuordnen, dass die Schraube in Kombination mit dem Handlauf kein Drehmoment auf die Spannarme ausübt. Ansonsten besteht die Gefahr, dass der Spannarm bricht und dass die Befestigungsvorrichtung nicht sicher an dem Handlauf angebracht ist. Dazu sind die Spannarme zur Anlage an jeweils bestimmte Höhen der Handläufe ausgebildet, so dass der Handlauf zentriert in der Ebene angeordnet ist, in der Kraftachse der Schraube, d.h. die Richtung der von der Schraube ausgeübten Kraft, ausgerichtet ist. Die Höhe eines Handlaufs ist dabei der Abstand zwischen der unteren Kante des Handlaufs mit seiner oberen Kante.

Nachteil dieser bekannten Befestigungsvorrichtungen ist, dass für Handläufe mit unterschiedlichen Höhen unterschiedliche Befestigungsvorrichtungen mit unterschiedlich ausgeformten Spannarmen benötigt werden, die an die Maße des jeweiligen Handlaufs angepasst sind. Klemmvorrichtungen mit Spannarmen, die für schmale Handläufe geeignet sind, können dementsprechend nicht für die Befestigung von Anbauteilen an breiten Handläufen genutzt werden. Ebenso sind Klemmvorrichtungen mit Spannarmen, die für die Befestigung von Anbauteilen an schmalen Handläufen ausgelegt sind, nicht für die Befestigung an breiten Handläufen geeignet. Damit muss für jede Handlaufhöhe eine separate Befestigungsvorrichtung, die an die jeweilige Handlaufhöhe angepasst ist, vorgesehen werden.

Die der vorliegenden Erfindung zugrundeliegende Aufgabe ist es, eine Vorrichtung zu schaffen, die für mehrere Handlaufhöhen geeignet ist.

Die Aufgabe wird gelöst durch die Merkmale der unabhängigen Ansprüche. Vorteilhafte Weiterbildungen sind Gegenstand der abhängigen Ansprüche.

Bei einer Klemmvorrichtung zur Befestigung von Anbauteilen am Handlauf von Geländern, ist erfindungsgemäß vorgesehen, dass die Klemmvorrichtung mindestens eine Klemmbacke, die mindestens eine Schieberfläche aufweist, und mindestens einen an der Klemmbacke angeordneten Schieber, der mindestens eine Anlagefläche, die zur Anlage mindestens einer Teiloberfläche eines Handlaufs eines Geländers ausgebildet ist, und mindestens eine der Anlagefläche gegenüberliegende Backenfläche aufweist, die zur Anlage an die Schieberfläche und zur Verschiebung entlang der Schieberfläche ausgebildet ist, umfasst.

Zunächst werden einige Begriffe näher erläutert:

Unter einer Klemmbacke wird der Teil einer Klemmvorrichtung verstanden, der mit einem einzuklemmenden Gegenstand und einer gegenüberliegenden Klemmbacke eine Sandwich-Anordnung bildet. Eine Klemmbacke bildet dabei einen Teil eines von einem Führungsarm abragenden Klemmarms oder eines dem Klemmarm gegenüberliegenden Schlittens einer Klemmvorrichtung. Die Klemmbacke kann einstückig mit dem Klemmarm bzw. mit dem Schlitten ausgebildet sein oder als separates Element ausgeführt werden.

Der Erfindung liegt der Gedanke zu Grunde, die Klemmbacken einer Klemmvorrichtung mittels Schiebern zur Anlage an verschiedene Höhen von Handläufen von Geländern anzupassen. Die Klemmvorrichtung weist dazu eine modulare Anordnung aus Klemmbacken und Schiebern auf. Ein Schieber kann durch eine Verschiebung entlang der Klemmbacke flexibel angeordnet werden und weist eine Anlagefläche auf, an die ein Handlauf eines Geländers angeordnet werden kann. Mit einer Verschiebung des Schiebers wird ebenfalls die Anlagefläche für den Handlauf verschoben. Der Schieber bestimmt damit die relative Position des Handlaufs an der Klemmbacke. Die Klemmvorrichtung wird weiter durch die Anlagefläche des Schiebers an dem Handlauf abgestützt und der Handlauf jeweils in der Ebene, in der die von der Klemmvorrichtung ausgeübte Kraft ausgerichtet ist, angeordnet. Die Kraft ist durch diese Anordnung auf den Handlauf gerichtet. Damit wird sichergestellt, dass der Handlauf keinen Angelpunkt bildet, an dem während der Verklemmung der Klemmvorrichtung an dem Handlauf eine Hebelwirkung an der Klemmbacke ansetzen kann. Aufgrund der Verschiebbarkeit des Schiebers entlang der Schieberfläche der Klemmbacken kann die Position der Anlagefläche an die Höhe des jeweiligen Handlaufs angepasst werden. Damit ist die erfindungsgemäße Klemmvorrichtung für die Verklemmung an verschieden hohe Handläufe geeignet.

Vorteilhafterweise weist die Backenfläche mindestens eine erste Rastkomponente auf und die Schieberfläche mindestens eine zweite Rastkomponente auf, wobei die zweite Rastkomponente zur Bildung einer Rastverbindung mit der ersten Rastkomponente ausgebildet ist und eine formschlüssige Aufnahme für die erste Rastkomponente bildet. Bei der Verklemmung der Klemmbacke an dem Handlauf wird der Schieber mit der ersten Rastkomponente in die zweite Rastkomponente gedrückt. Durch die formschlüssige Aufnahme in dieser Rastverbindung, wird der Schieber mittels der Backenfläche an der Schieberfläche der Klemmbacke fest positioniert. Eine weitere Verschiebung des Schiebers entlang der Schieberfläche der Klemmbacke wird damit vermieden. Dies erhöht die Haltesicherheit der Klemmvorrichtung am Handlauf gegenüber Drehmomenten, die durch die an der Klemmvorrichtung angebrachte Balkon Verschattung wirken können.

Es ist zweckmäßig, dass die Anlagefläche mindestens eine Kantenaufnahmefläche und/oder mindestens eine Kreisbogenaufnahmefläche jeweils für die Aufnahme zumindest einer Teiloberfläche eines eckigen oder runden Handlaufs eines Geländers aufweist. Damit wird ermöglicht, die Klemmvorrichtung sicher an eckigen bzw. runden Handläufe anzuordnen. Der Schieber ist mittels der entsprechenden Aufnahme optimal an die Form des Handlaufs angepasst. Mittels der Kreisbogenaufnahmefläche können weiter ovale Handläufe für die Befestigung von Balkon Verschattungen genutzt werden. Dies war mit dem bekannten Stand der Technik bisher nicht möglich. Vorteilhafterweise wird die Anlagefläche vorzugsweise durch mindestens ein zumindest an der Anlagefläche gummiertes Element gebildet. Mittels des gummierten Elements wird an der Klemmvorrichtung auftretenden Drehmomenten weiter entgegengewirkt. Dies erhöht die Sicherheit der Anordnung der Klemmvorrichtung an einem Handlauf weiter. Besonders in Kombination mit einer Kreisbogenaufnahmefläche können Drehmomente durch die erhöhte Reibung zwischen dem Handlauf und dem Schieber kompensiert werden, ohne dass die Klemmvorrichtung relativ zum Handlauf verdreht wird.

Mit Vorteil weist der Schieber mindestens einen Zahn und mindestens eine passend zu dem Zahn ausgebildete Ausnehmung auf, wobei der Zahn und die Ausnehmung abwechselnd an der Anlagefläche parallel zur Backenfläche angeordnet sind, und wobei die parallel zur Backenfläche verlaufende Mittelachse des Schiebers den Übergang zwischen einem Zahn und einer Ausnehmung bildet. Unter einer Anordnung parallel zur Backenfläche wird eine Anordnung verstanden, bei die Verbindungslinie zwischen der Zahnwurzel und dem freien Ende des Zahns parallel zur Backenfläche verläuft. Bei der Anordnung eines zweiten identisch zum ersten Schieber ausgebildeten Schiebers an die Klemmbacke wird der minimale Abstand zwischen den Schiebern durch ein Ineinandergreifen der Zähne des einen Schiebers mit den Ausnehmungen des anderen Schiebers im Vergleich zu Schiebern, die keine Zähne und Ausnehmungen aufweisen, verringert. Dadurch wird die minimale Höhe der Handläufe, an denen die Klemmvorrichtung angeordnet werden kann, verringert.

Zweckmäßigerweise weist die Klemmbacke mindestens eine laterale Führungsschiene auf, wobei der Schieber mindestens einen die laterale Führungsschiene hintergreifenden Führungsschlitten aufweist, wobei Führungsschlitten und Führungsschiene eine Gleitführung bilden, entlang der der Schieber verschiebbar ist, wobei der Schieber vorzugsweise mittels der Gleitführung lösbar an der Klemmbacke befestigt ist. Unter lateral wird die Seite der Klemmbacke verstanden, die bei der Anordnung der Klemmvorrichtung an dem Handlauf senkrecht zu dem Handlauf und parallel zu dessen Höhe angeordnet ist. Mittels der Gleitführung kann der Schieber sicher entlang der Klemmbacke verschoben werden, ohne dass er lateral von der Schieberfläche verschoben werden kann. Damit wird die Haltesicherheit der Klemmvorrichtung weiter erhöht. Durch die Lösbarkeit des Schiebers von der Klemmbacke, kann ein defekter Schieber gegebenenfalls ersetzt werden. Weiter kann die Klemmbacke durch Lösung des Schiebers von der Klemmbacke an die Anlage an einen als Mauer ausgebildeten Handlauf angepasst werden. Damit wird die Anpassbarkeit der Klemmbacke an verschiedene Handlaufformen weiter erhöht.

Es ist weiter vorteilhaft, dass die Klemmbacke mindestens eine Stoppkomponente aufweist, die zum Aufhalten einer Bewegung des Schiebers über die Schieberfläche hinaus ausgebildet ist, wobei die Stoppkomponente vorzugsweise als über die Schieberfläche hervorstehender Stift ausgebildet ist. Der Schieber kann dabei nicht über die Stoppkomponente geschoben werden. Auf diese Weise kann verhindert werden, dass der Schieber so an der Schieberfläche angeordnet wird, dass die Backenfläche des Schiebers nicht mehr vollständig an der Schieberfläche der Klemmbacke anliegt. Ein nicht vollständig auf der Schieberfläche anliegender Schieber kann über die Kante der Schieberfläche Drehmomenten unterliegen, die zu einer Beschädigung des Schiebers und zu einem Verlust der Haltekraft der Klemmvorrichtung führen können. Daher erhöht die Stoppkomponente die Sicherheit der Handhabung der Klemmvorrichtung.

Mit Vorteil ist die Klemmbacke als lösbarer Aufsatz für mindestens einen Klemmarm der Klemmvorrichtung ausgebildet, wobei der Klemmarm vorzugsweise mindestens ein Kopplungselement für eine Klemmbacke und wobei die Klemmbacke vorzugsweise eine passende Gegenstruktur für ein Kopplungselement eines Klemmarms aufweist, die auf der zur Schieberfläche gegenüberliegenden Seite angeordnet ist, und wobei die Klemmbacke vorzugsweise mittels der passenden Gegenstruktur und des Kopplungselements an dem Klemmarm befestigbar ist. Dies bewirkt eine sichere Befestigung der Klemmbacke an der Klemmvorrichtung. Weiter kann die Klemmbacke von der Klemmvorrichtung gelöst werden, um die Einstellung des mindestens einen Schiebers für den jeweiligen Handlauf durchzuführen. Damit wird die Handhabung der Klemmvorrichtung vereinfacht.

Zweckmäßigerweise weist die Klemmbacke eine Markierung auf, die in einer rechtwinklig zur Richtung der Verschiebung der Schieber entlang der Schieberfläche angeordneten Ebene, wobei die Ebene die Kraftachse der Klemmvorrichtung umfasst, angeordnet ist. Unter einer Kraftachse wird die Achse verstanden, auf der der Kraftvektor der von der Klemmvorrichtung ausgeübten Kraft angeordnet ist. Damit ist die optimale vorgesehene Anlageposition des Handlaufs an der Klemmbacke an Hand der Markierung klar ersichtlich ist. Der mindestens eine Schieber kann damit so auf der Klemmbacke verschoben werden, dass der Handlauf keinen Angelpunkt für ein Drehmoment bildet, das auf den Schieber wirkt, wenn die Klemmvorrichtung verklemmt wird. Damit wird die Handhabung der Klemmvorrichtung weiter vereinfacht.

Es ist weiter vorteilhaft, dass die Klemmvorrichtung einen Führungsarm aufweist, wobei der Klemmarm von dem Führungsarm abragt, und ein an der Klemmbacke angeordnetes Verdrehsicherungselement der Klemmbacke an dem Führungsarm angeordnet ist, wobei das Verdrehsicherungselement zur Sicherung der Klemmbacke gegen eine Verdrehung relativ zur Klemmvorrichtung ausgebildet ist, wobei die Klemmbacke vorzugsweise nur bei Anlage des Verdrehsicherungselements an dem Führungsarm an der Klemmvorrichtung befestigbar ist. Damit wird eine Verdrehung der Klemmbacke und damit eine ungünstige Positionierung des Schiebers relativ zum Handlauf vermieden. Weiter kann die Klemmbacke nur in einer Ausrichtung an die Klemmvorrichtung befestigt werden. Die Klemmbacke weist damit eine eindeutige Ausrichtung zur Klemmvorrichtung auf und kann nur in dieser Ausrichtung an dem Kopplungselement befestigt werden. Dies erhöht die Haltesicherheit und Handhabung der Klemmvorrichtung. Vorteilhafterweise ist die Klemmbacke derart an dem Klemmarm angeordnet, dass die Klemmbacke mindestens eine Aufnahme für ein Sicherungselement aufweist, das zur Befestigung der Klemmbacke an dem Führungsarm ausgebildet ist, wobei das Sicherungselement vorzugsweise als Blechklemme ausgebildet ist, die den Führungsarm umgreift, und die Aufnahme vorzugsweise als passender Schlitz für die Blechklemme ausgebildet ist. Durch die Befestigung der Klemmbacke an dem Führungsarm der Klemmvorrichtung wird eine Verdrehung der Klemmbacke relativ zur Klemmvorrichtung vermieden. Damit erhöht sich die Sicherheit der Halterung der Klemmvorrichtung an dem Handlauf.

Die Erfindung betrifft weiter einen Nachrüstsatz für eine Klemmvorrichtung, die mindestens einen Klemmarm aufweist, umfassend mindestens eine Klemmbacke, die mindestens eine Schieberfläche aufweist, und mindestens einen Schieber, wobei die Klemmbacke zur Anordnung an den Klemmarm ausgebildet ist und der Schieber zur Anordnung an die Klemmbacke ausgebildet ist, wobei der Schieber mindestens eine Anlagefläche, die zur Anlage mindestens einer Teiloberfläche eines Handlaufs von Geländern ausgebildet ist, und mindestens eine der Anlagefläche gegenüberliegende Backenfläche aufweist, die zur Anlage an die Schieberfläche ausgebildet ist.

Weiter betrifft die Erfindung ein System umfassend eine erfindungsgemäße Klemmvorrichtung und eine Gummieinlage, die zur Anordnung zwischen der Klemmvorrichtung und den Handlauf eines Geländers ausgebildet ist.

Mittels der Gummieinlage kann die Reibung zwischen dem Handlauf und dem Schieber weiter erhöht werden, so dass Drehmomente, die durch ein Anbauteil auf die Klemmvorrichtung übertragen werden, entgegengewirkt wird. Dies erhöht die Haltesicherheit der Klemmvorrichtung an dem Handlauf und verringert die Gefahr einer Verdrehung der Klemmvorrichtung um den Handlauf bzw. ein Umkippen der Balkon Verschattung. Weiter werden damit Beschädigungen an der Klemmvorrichtung und der Balkon Verschattung sowie Beschädigungen an der Oberfläche des Handlaufs durch die Klemmvorrichtung vermieden.

Anhand einer vorteilhaften Ausführungsform wird die Erfindung mittels der beigefügten Zeichnung beschrieben. Es zeigen:
- Fig. 1a, b:: eine schematische Darstellung einer zusammengebauten Klemmvorrichtung (a) und ihrer Einzelteile (b);
- Fig. 2a, b:: eine schematische Darstellung einer Klemmbacke mit einem Schieber;
- Fig. 3a, b;: eine schematische Darstellung eines Schiebers;
- Fig. 4:: eine schematische Darstellung einer an einem Handlauf angeordneten Klemmvorrichtung mit Gummieinlage;
- Fig. 5a-d:: eine schematische Darstellung der Anordnung der Klemmbacken mit und ohne Schieber an verschieden ausgeformte Handläufe; und
- Fig. 6a, b:: eine schematische Schnittdarstellung durch eine an einem Handlauf angeordnete Klemmbacke mit Schiebern.

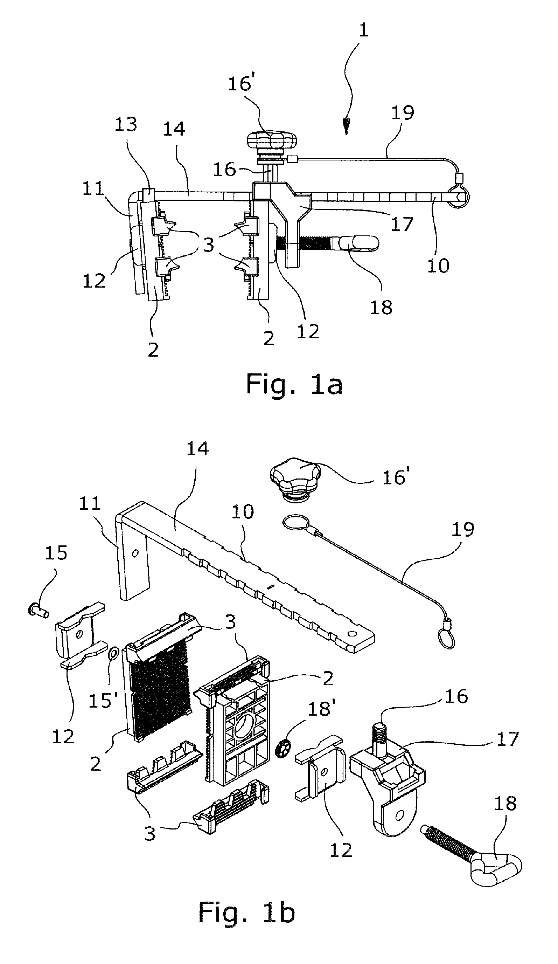

Eine Klemmvorrichtung wird in ihrer Gesamtheit mit dem Bezugszeichen 1 gekennzeichnet. Gemäß Figur 1a umfasst die Klemmvorrichtung 1 einen Führungsarm 14 mit einem von dem Führungsarm 14 abragenden Klemmarm 11. Zur Ankopplung eines Anbauteils umfasst die Klemmvorrichtung 1 eine Anbaukopplungskomponente 16 mit einer Befestigungskomponente 16', die mittels einer Sicherungskomponente 19 an dem Führungsarm 14 befestigt ist. Weiter ist ein dem Klemmarm 11 gegenüberliegender Schlitten 17 an dem Führungsarm 14 angeordnet. Der Schlitten 17 bildet mit dem Führungsarm 14 eine Gleitführung, wobei der Schlitten 17 entlang des Führungsarms 14 verschoben werden kann. Der Führungsarm 14 umfasst dazu eine Rastung 10, die festgelegte Positionen an dem Führungsarm 14 für den Schlitten 17 bereitstellt.

Der Klemmarm 11 und der Schlitten 17 umfassen jeweils ein Kopplungselement 12. Gemäß Figur 1b ist das an dem Klemmarm 11 angeordnete Kopplungselement 12 mittels eines Befestigungssystems 15, 15' befestigt. Das an dem Schlitten 17 angeordnete Kopplungselement 12 ist an dem Schlitten 17 mittels eines Betätigungselements 18 befestigt, mit der das Kopplungselement 12 des Schlittens 17 gegen das an dem Klemmarm 11 befestigte Kopplungselement 12 geklemmt werden kann. Das Betätigungselement 18 ist durch das Kopplungselement 12 geführt und auf einem Lager 18' drehbar gegen die Klemmbacke 2 gelagert.

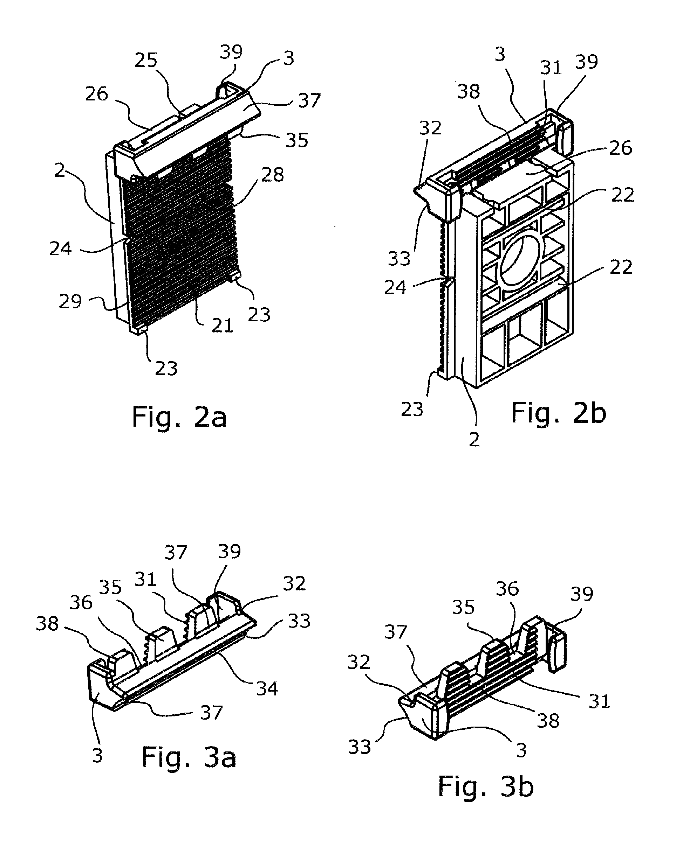

An den Kopplungselementen 12 ist je eine Klemmbacke 2 gemäß der Figuren 2a, 2b mit einer zu einem Kopplungselement 12 passenden Gegenstruktur 22 befestigt. Eine Klemmbacke 2 kann dabei mittels der Gegenstruktur 22 an einem Kopplungselement 12 lösbar befestigt werden. Auf der zur Gegenstruktur 22 gegenüberliegenden Seite der Klemmbacke 2 ist eine von der Gegenstruktur 22 weg weisende Schieberfläche 28 angeordnet. An der Klemmvorrichtung 1 sind die Klemmbacken 2 dabei derart angeordnet, dass ihre Schieberflächen 28 jeweils zu einander weisen. D. h. bei einer Befestigung der Klemmvorrichtung 1 an einem Handlauf 4, ist der Handlauf 4 zwischen den Schieberflächen 28 der Klemmbacken 2 angeordnet.

Die Klemmbacken 2 umfassen jeweils mindestens einen in den Figuren 3a und 3b dargestellten Schieber 3. Der Schieber 3 umfasst eine Backenfläche 38, die eine erste Rastkomponente 31 aufweist. Die Backenfläche 38 liegt dabei an der Schieberfläche 28 der Klemmbacke 2 an. Mit der Backenfläche 38 kann der Schieber 3 entlang der Schieberfläche 28 verschoben werden. Die Schieberfläche 28 weist dazu eine zweite Rastkomponente 21 auf, in die die erste Rastkomponente 31 eingreift, wobei die zweite Rastkomponente 21 eine formschlüssige Aufnahme für die erste Rastkomponente 31 bildet. Bei einer Verschiebung des Schiebers 3 entlang der Schieberfläche 28 der Klemmbacke 2 kann die Rastverbindung zwischen der ersten und der zweiten Rastkomponente 21, 31 überdrückt werden. Damit kann die Position des Schiebers 3 an der Klemmbacke 2 an die Höhe eines Handlaufs 4 angepasst werden. Der Schieber 3 wird dabei so positioniert, dass die von dem Betätigungselement 18 ausgeübte Kraft in Richtung des Handlaufs 4 gerichtet ist.

Zur Verschiebung des Schiebers 3 ist an der Klemmbacke 2 eine laterale Führungsschiene 29 vorgesehen. Die Führungsschiene 29 verläuft lateral seitlich an der Klemmbacke 2. Der Schieber 3 umfasst einen Führungsschlitten 39, der die Führungsschiene 29 hintergreift. Der Führungsschlitten 39 und die Führungsschiene 29 bilden eine Gleitführung für den Schieber 3 an der Klemmbacke 2. Mittels des Führungsschlittens 39 und der Führungsschiene 29 wird eine Verschiebung des Schiebers 3 quer zu lateralen Führungsschiene vermieden. Weiter ist der Führungsschlitten 39 so ausgebildet, dass der Schieber 3 nicht von der Schieberfläche 28 der Klemmbacke 2 angehoben werden kann. Der Schieber 3 kann lediglich entlang der Führungsschiene 29, d.h. entlang der Schieberfläche 28 von der Klemmbacke 2 geschoben werden.

Zur Vereinfachung der Positionierung der Schieber 3 ist eine Markierung 24 an der Klemmbacke 2 vorgesehen, die die Kraftachse der von dem Betätigungselement 18 ausgeübten Kraft markiert. Der Schieber 3 wird dabei so weit von der Markierung 24 beabstandet an der Schieberfläche 28 angeordnet, dass der Abstand zwischen der Markierung 24 und dem Schieber 3 der Hälfte der Höhe des Handlaufs 4 entspricht. Wenn zwei Schieber 3 an der Klemmbacke 2 angeordnet werden, werden beide Schieber 3 symmetrisch zu der Markierung 24 angeordnet.

Zur Aufnahme des Handlaufs 4 weisen die Schieber 3 eine Anlagefläche 37 auf. Die Anlagefläche 37 umfasst dabei eine Kantenaufnahmefläche 32 und eine Kreisbogenaufnahmefläche 33. Die Kantenaufnahmefläche 32 ist dabei ausgebildet, eine eckige Handlaufform aufzunehmen. Die Kreisbogenaufnahmefläche 33 ist ausgebildet, eine runde oder ovale Handlaufform aufzunehmen. In der einer ersten bevorzugten Ausführungsform der Anlagefläche 37 sind die Kantenaufnahmefläche 32 und die Kreisbogenaufnahmefläche 33 nebeneinander an dem Schieber 3 angeordnet, so dass ein Wechsel zwischen der Kantenaufnahmefläche 32 und der Kreisbogenaufnahmefläche 33 durch eine um 180° gedrehte Positionierung des Schiebers 3 an der Klemmbacke 2 durchgeführt werden kann. Es sei jedoch nicht ausgeschlossen, dass in einer nicht dargestellten zweiten bevorzugten Ausführungsform der Anlagefläche 37 die Kantenaufnahmefläche 32 und die Kreisbogenaufnahmefläche 33 ineinander integriert ausgebildet sind.

In einer dritten bevorzugten Ausführungsform ist die Anlagefläche 37 aus einem an der Anlagefläche 37 gummierten Element 34 gebildet. Damit erhöht sich die Reibung zwischen dem Handlauf 4 und der Kantenaufnahmefläche 32 bzw. der Kreisbogenaufnahmefläche 33. Weiter wird eine Beschädigung oder das Verkratzen des Handlaufs 4 durch die Verklemmung der Klemmvorrichtung 1 vermieden.

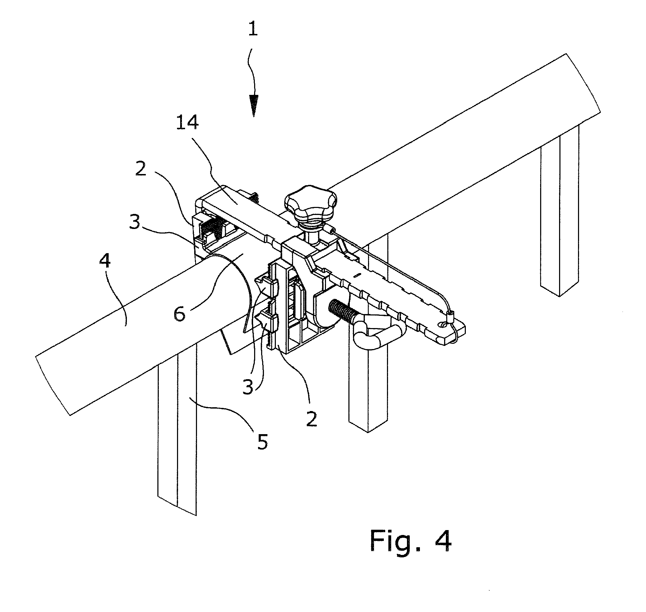

In einer vierten bevorzugten Ausführungsform ist die Klemmvorrichtung 1 ausgebildet, mit einer Gummieinlage 6 verwendet zu werden, wie in Figur 4 dargestellt. Die Gummieinlage 6 wird in dieser Ausführungsform um den Handlauf 4 angeordnet, so dass er sich zwischen der Klemmvorrichtung 1 bzw. den Schiebern 3 und dem Handlauf 4 befindet.

In einer fünften bevorzugten Ausführungsform sind die dritte und vierte Ausführungsform der Anlagefläche 37 miteinander kombiniert.

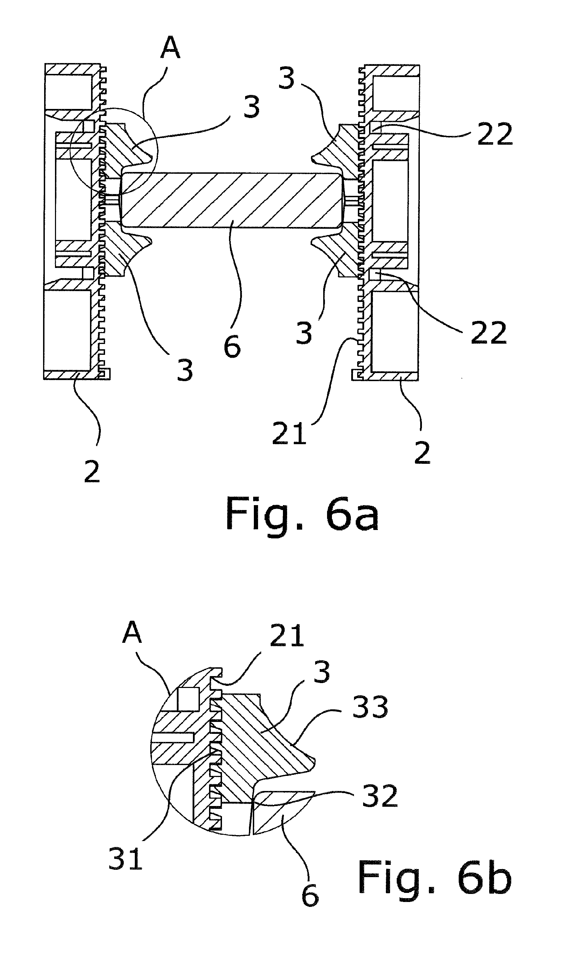

Bei einer Verklemmung der Klemmvorrichtung 1 an einen Handlauf 4 eines Geländers 5 werden die Schieber 3 mit ihrer Anlagefläche 37 an eine Teiloberfläche des Handlaufs 4 angeordnet. Wie in Figuren 6a und 6b dargestellt, wird durch die Verklemmung des Handlaufs 4 zwischen die Schieber 3 der beiden Klemmbacken 2 jeweils die erste Rastkomponente 31 eines Schiebers 3 in die zweite Rastkomponente 21 der jeweiligen Klemmbacke 2 gedrückt, so dass eine Verschiebung der Schieber 3 entlang der Schieberfläche 28 durch die formschlüssige Aufnahme der ersten Rastkomponente 31 in der zweiten Rastkomponente 21 so weit erschwert wird, dass die bei der Benutzung der Klemmvorrichtung 1 mit einer Balkon Verschattung auftretenden Kräfte und Momente nicht zu einer Überdrückung der Rastverbindung zwischen dem Schieber 3 und der Klemmbacke 2 ausreichen. Die Rastverbindung wird daher durch die Verklemmung fest. Die durch die Verklemmung an dem Handlauf 4 an die Klemmbacken 2 gedrückten Schieber 3 verbleiben an ihrer Position. Der Handlauf 4 wird damit sicher zwischen den Klemmbacken 2 an den Schiebern 3 gehalten.

Um eine teilweise Anordnung der Backenfläche 38 der Schieber 3 an der Schieberfläche 28 der Klemmbacke 2 zu verhindern, sind Stoppelemente 23 an der Klemmbacke 2 vorgesehen. Die Stoppelemente 23 sind als Stifte ausgebildet, die über die Schieberfläche 28 hinausragen. Damit bilden sie für die Verschiebung eines Schiebers 3 entlang der Schieberfläche 28 ein Hindernis, über das der Schieber 3 nicht geschoben werden kann.

Der Schieber 3 und/oder die Klemmbacke 2 bestehen weiter aus Metall oder Kunststoff, vorzugsweise Polyamid 6, weiter vorzugsweise Polyamid 6 mit einem Glasfaseranteil zwischen 15 und 50 Prozent, vorzugsweise zwischen 20 und 30 Prozent, weiter vorzugsweise 25 Prozent.

Weiter weist die Klemmbacke 2 entlang des Klemmarms 11 eine Höhe zwischen 3 cm und 8 cm, vorzugsweise zwischen 5 cm und 7 cm, weiter vorzugsweise 6 cm, entlang des Führungsarms 14 eine Tiefe zwischen 0,5 cm und 2,5 cm, vorzugsweise 1 cm, und rechtwinklig zur Tiefe und zur Höhe eine Breite zwischen 2 cm und 7 cm, vorzugsweise 3 cm und 6 cm, weiter vorzugsweise 4,5 cm, auf.

Für die nachfolgende Erläuterung wird davon ausgegangen, dass die Klemmbacke 2 eine Höhe von 6 cm, eine Tiefe von 1 cm und einer Breite von 4,5 cm aufweist.

Die Abmessungen und die Positionierung des Klemmarms 11 an dem Führungsarm 14 und der Kopplungselemente 12 sind dabei so gewählt, dass eine an der Klemmbacke 2 angeordnetes Verdrehsicherungselement 26 an dem Führungsarm 14 anliegt, wenn die Klemmbacke 2 an dem Klemmarm 11 befestigt ist. Durch das Verdrehsicherungselement 26 kann die Klemmbacke 2 relativ zum Führungsarm 14 nicht gedreht werden. Bei einer Montage der Klemmvorrichtung 1 an Handläufen 4, die kleinere Abmessungen als die Klemmbacke 2 aufweisen, wird damit eine Verdrehung der Klemmbacke 2 gegenüber dem Handlauf 4 und der Klemmvorrichtung 1 verhindert.

Weiter weist die Klemmbacke 2 eine Aufnahme 25 auf, in die ein Sicherungselement 13 angeordnet werden kann. Das Sicherungselement 13 ist als Blechklammer ausgebildet, die den Führungsarm 14 umgreift. Die Aufnahme 25 ist als zur Blechklammer passender Schlitz ausgebildet. Das Sicherungselement 13 wird in der Aufnahme 25 der Klemmbacke 2 angeordnet, wobei die Klemmbacke 2 über das Sicherungselement 13 mit dem Führungsarm 11 verbunden wird.

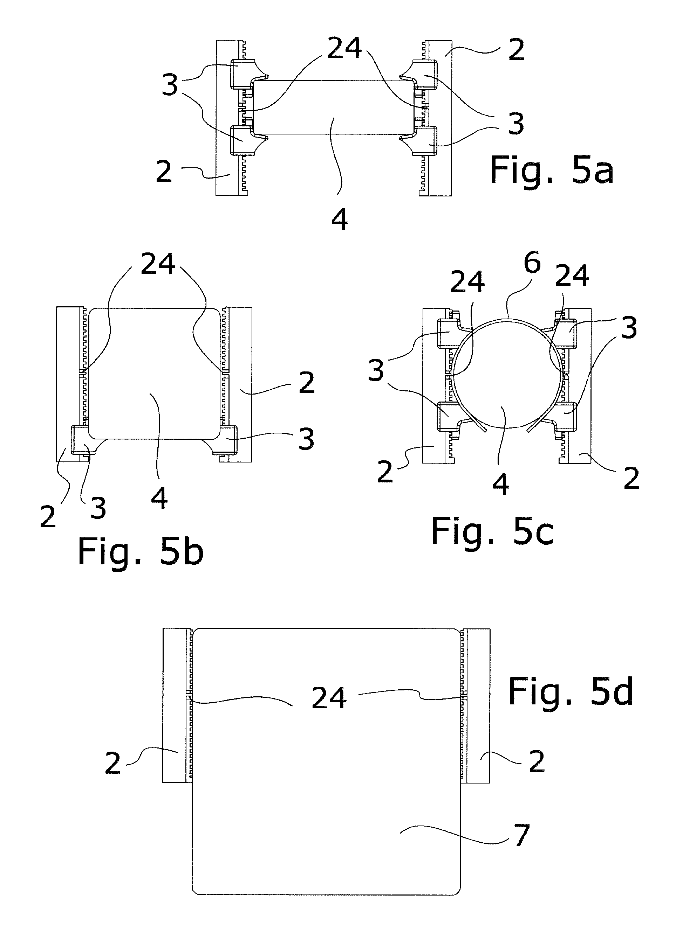

In den Figuren 5a bis 5d wird die Befestigung der Klemmvorrichtung 1 an verschiedene Handlaufformen mit unterschiedlichen Höhen dargestellt. In Figur 5a ist die Anpassung der Schieber 3 an einen rechteckigen Handlauf 4 mit einer Höhe zwischen 6 mm und 45 mm dargestellt. Der rechteckige Handlauf 4 ist dabei in der Kantenaufnahmefläche 32 der Schieber 3 angeordnet. Dabei sind die Schieber 3 symmetrisch um die Markierungen 24 der Klemmbacken 2 angeordnet. Um die Klemmvorrichtung 1 für Handläufe 4 mit einer minimalen Höhe einzustellen, weisen die Schieber 3 Zähne 35 und Ausnehmungen 36 auf, die entlang der Anlagefläche 37 angeordnet sind. Zähne 35 und Ausnehmungen 36 wechseln sich dabei ab. Die zur Backenfläche 38 parallele Mittelachse des Schiebers 3 ist zwischen einem Zahn 35 und einer Ausnehmung 36 angeordnet. Die Schieber 3 sind baugleich ausgebildet, so dass bei einer Ausrichtung der Zähne 35 zweier Schieber 3 zueinander die Zähne 35 des einen Schiebers 3 in die Ausnehmungen 36 des anderen Schieber 3 geschoben werden können. Damit verringert sich die minimal mögliche Höhe der Handläufe 4, an die die Schieber 3 angepasst werden können.

Figur 5b zeigt die Anpassung der Klemmbacken 2 an einen Handlauf 4, der eine Höhe aufweist, die so groß ist, dass nur ein Schieber 3 an der Klemmbacke 2 passend für den Handlauf 4 angeordnet werden kann. Ein zweiter Schieber 3, der vor dem Anordnen der Klemmbacke 2 an den Handlauf 4 an der Klemmbacke 2 angeordnet ist, kann von der Klemmbacke 2 gelöst werden. Der verbleibende Schieber 3 wird an Unterseite des Handlaufs 4 angeordnet. Mit dieser Anordnung ist die Anpassung der Klemmbacken 2 an Handläufe 4 mit einer Höhe von 45 mm bis 50 mm ermöglicht.

Die Anpassung der Schieber 3 an einen runden Handlauf 4 wird in Figur 5c dargestellt. Zwei Schieber 3 werden dabei mit zu einander weisenden Kreisbogenaufnahmeflächen 33 an einer Klemmbacke 2 angeordnet. Um den runden Handlauf 4 kann die Gummieinlage 6 angeordnet werden, um die Reibung zwischen den Schiebern 3 und dem Handlauf 4 zu erhöhen. Die Schieber 3 können für runde oder ovale Handläufe 4 mit einem maximalen Durchmesser von 50 mm angepasst werden.

Für die Anpassung an eine Mauer 7 mit einer Breite von bis zu 120 mm werden gemäß Figur 5d alle Schieber 3 von den Klemmbacken 2 gelöst. Die Klemmbacken 2 werden für die Montage an einer Mauer 7 direkt an die Mauer 7 angelegt.

## Patentansprüche

1. Klemmvorrichtung zur Befestigung von Anbauteilen am Handlauf (4) von Geländern (5),
**dadurch gekennzeichnet, dass**
die Klemmvorrichtung (1) mindestens eine Klemmbacke (2), die mindestens eine Schieberfläche (28) aufweist, und mindestens einen an der Klemmbacke (2) angeordneten Schieber (3), der mindestens eine Anlagefläche (37), die zur Anlage mindestens einer Teiloberfläche eines Handlaufs (4) eines Geländers (5) ausgebildet ist, und mindestens eine der Anlagefläche (37) gegenüberliegende Backenfläche (38) aufweist, die zur Anlage an die Schieberfläche (28) und zur Verschiebung entlang der Schieberfläche (28) ausgebildet ist, umfasst.

2. Klemmvorrichtung nach Anspruch 1,
**dadurch gekennzeichnet, dass**
die Backenfläche (38) mindestens eine erste Rastkomponente (31) aufweist und die Schieberfläche (28) mindestens eine zweite Rastkomponente (21) aufweist, die zur Bildung einer Rastverbindung mit der ersten Rastkomponente (38) ausgebildet ist und eine formschlüssige Aufnahme für die erste Rastkomponente (38) bildet.

3. Klemmvorrichtung nach einem der Ansprüche 1 oder 2,
**dadurch gekennzeichnet, dass**
die Anlagefläche (37) mindestens eine Kantenaufnahmefläche (32) und/oder mindestens eine Kreisbogenaufnahmefläche (33) jeweils für die Aufnahme zumindest einer Teiloberfläche eines eckigen oder runden Handlaufs (4) eines Geländers (5) aufweist, wobei die Anlagefläche (37) vorzugsweise durch mindestens ein mindestens an der Anlagefläche (37) gummiertes Element (34) gebildet ist.

4. Klemmvorrichtung nach einem der Ansprüche 1 bis 3,
**dadurch gekennzeichnet, dass**
der Schieber (3) mindestens einen Zahn (35) und mindestens eine passend zu dem Zahn (35) ausgebildete Ausnehmung (36) aufweist, wobei der Zahn (35) und die Ausnehmung (36) abwechselnd an der Anlagefläche (37) parallel zur Backenfläche (38) angeordnet sind, und wobei die parallel zur Backenfläche (38) verlaufende Mittelachse des Schiebers (3) den Übergang zwischen einem Zahn (35) und einer Ausnehmung (36) bildet.

5. Klemmvorrichtung nach einem der Ansprüche 1 bis 4,
**dadurch gekennzeichnet, dass**
die Klemmbacke (2) mindestens eine laterale Führungsschiene (29) aufweist, wobei der Schieber (2) mindestens einen die laterale Führungsschiene (29) hintergreifenden Führungsschlitten (39) aufweist, wobei Führungsschlitten (39) und Führungsschiene (29) eine Gleitführung bilden, entlang der der Schieber (3) verschiebbar ist, wobei der Schieber (3) vorzugsweise mittels der Gleitführung lösbar an der Klemmbacke (2) befestigt ist.

6. Klemmvorrichtung nach einem der Ansprüche 1 bis 5,
**dadurch gekennzeichnet, dass**
die Klemmbacke (2) mindestens eine Stoppkomponente (23) aufweist, die zum Aufhalten einer Bewegung des Schiebers (3) über die Schieberfläche (28) hinaus ausgebildet ist, wobei die Stoppkomponente (23) vorzugsweise als über die Schieberfläche (28) hervorstehender Stift ausgebildet ist.

7. Klemmvorrichtung nach einem der Ansprüche 1 bis 6,
**dadurch gekennzeichnet, dass**
die Klemmbacke (2) als lösbarer Aufsatz für mindestens einen Klemmarm (11) der Klemmvorrichtung (1) ausgebildet ist, wobei der Klemmarm (11) vorzugsweise mindestens ein Kopplungselement (12) für eine Klemmbacke (2) und wobei die Klemmbacke (2) vorzugsweise eine passende Gegenstruktur (22) für das Kopplungselement (12) eines Klemmarms (11) aufweist, die auf der zur Schieberfläche (28) gegenüberliegenden Seite der Klemmbacke (2) angeordnet ist, und wobei die Klemmbacke (2) vorzugsweise mittels der passenden Gegenstruktur (22) und des Kopplungselements (12) an dem Klemmarm (11) befestigbar ist.

8. Klemmvorrichtung nach einem der Ansprüche 1 bis 7,
**dadurch gekennzeichnet, dass**
die Klemmbacke (2) eine Markierung (24) aufweist, die in einer rechtwinklig zur Richtung der Verschiebung des Schiebers (3) entlang der Schieberfläche (28) angeordneten Ebene, wobei die Ebene die Kraftachse der Klemmvorrichtung (1) umfasst, angeordnet ist.

9. Klemmvorrichtung nach einem der Ansprüche 1 bis 8,
**dadurch gekennzeichnet, dass**
die Klemmvorrichtung (1) einen Führungsarm (14) aufweist, wobei der Klemmarm (11) von dem Führungsarm (14) abragt, und die Klemmbacke (2) derart an dem Klemmarm (11) angeordnet ist, dass ein Verdrehsicherungselement (26) der Klemmbacke (2) an dem Führungsarm (14) angeordnet ist, wobei das Verdrehsicherungselement (26) zur Sicherung der Klemmbacke (2) gegen eine Verdrehung relativ zur Klemmvorrichtung (1) ausgebildet ist und die Klemmbacke (2) vorzugsweise nur bei Anlage des Verdrehsicherungselements (26) an dem Führungsarm (14) an der Klemmvorrichtung (1) befestigbar ist.

10. Klemmvorrichtung nach Anspruch 9,
**dadurch gekennzeichnet, dass**
die Klemmbacke (2) mindestens eine Aufnahme (25) für ein Sicherungselement (13) aufweist, das zur Befestigung der Klemmbacke (2) an dem Führungsarm (14) ausgebildet ist, wobei das Sicherungselement (13) vorzugsweise als Blechklemme ausgebildet ist, die den Führungsarm (14) umgreift, und die Aufnahme (25) vorzugsweise als passender Schlitz für die Blechklemme ausgebildet ist.

11. Klemmvorrichtung nach einem der Ansprüche 1 bis 10,
**dadurch gekennzeichnet, dass**
die Klemmbacke (2) entlang des Klemmarms (11) eine Höhe zwischen 3 cm und 8 cm, vorzugsweise zwischen 5 cm und 7 cm, weiter vorzugsweise 6 cm, entlang des Führungsarms (14) eine Tiefe zwischen 0,5 cm und 2,5 cm, vorzugsweise 1 cm, und rechtwinklig zur Tiefe und zur Höhe eine Breite zwischen 2 cm und 7 cm, vorzugsweise 3 cm und 6 cm, weiter vorzugsweise 4,5 cm, aufweist.

12. Klemmvorrichtung nach einem der Ansprüche 1 bis 11,
**dadurch gekennzeichnet, dass**
der Schieber (3) und/oder die Klemmbacke (2) aus Metall oder Kunststoff, vorzugsweise Polyamid 6, weiter vorzugsweise Polyamid 6 mit einem Glasfaseranteil zwischen 15 und 50 Prozent, vorzugsweise zwischen 20 und 30 Prozent, weiter vorzugsweise 25 Prozent, besteht.

13. Nachrüstsatz für eine Klemmvorrichtung (1), die mindestens einen Klemmarm (11) aufweist, umfassend mindestens eine Klemmbacke (2), die mindestens eine Schieberfläche (28) aufweist, und mindestens einen Schieber (3), wobei die Klemmbacke (2) zur Anordnung an den Klemmarm (11) ausgebildet ist und der Schieber (3) zur Anordnung an die Klemmbacke (2) ausgebildet ist, wobei der Schieber (3) mindestens eine Anlagefläche (37), die zur Anlage mindestens einer Teiloberfläche eines Handlaufs (4) von Geländern (5) ausgebildet ist, und mindestens eine der Anlagefläche (37) gegenüberliegende Backenfläche (38) aufweist, die zur Anlage an die Schieberfläche (28) ausgebildet ist.

14. System umfassend eine Klemmvorrichtung (1) nach einem der Ansprüche 1 bis 13 und eine Gummieinlage (6), die zur Anordnung zwischen der Klemmvorrichtung (1) und dem Handlauf (4) eines Geländers (5) ausgebildet ist.
